# EUROPÄISCHE PATENTSCHRIFT

(11) **EP 1 083 280 B1**
(45) Veröffentlichungstag und Bekanntmachung des Hinweises auf die Patenterteilung: **23.05.2007**
(21) Anmeldenummer: 00119657.5
(22) Anmeldetag: 08.09.2000
(51) Int. Cl.: G07C 9/00, E05B 49/00

(54) **Schlüssellose Betätigungs- und/oder Schliesseinrichtung für insbesondere Kraftfahrzeuge**
Keyless actuating and/or locking device, particularly for vehicles
Dispositif d'actionnement et/ou de fermeture sans clé, notamment pour véhicule automobile

(30) Priorität: 10.09.1999 DE 19943233
(43) Veröffentlichungstag der Anmeldung: 14.03.2001
(73) Patentinhaber: Kiekert Aktiengesellschaft, 42579 Heiligenhaus (DE)
(72) Erfinder: Labonde, Damien, 45279 Essen (DE); Rüffer, Andreas, 42579 Heiligenhaus (DE)
(74) Vertreter: Nunnenkamp, Jörg

(56) Entgegenhaltungen:
- EP-A- 0 783 190
- DE-A- 19 718 423
- DE-A- 19 745 149
- DE-U- 29 623 461

## Beschreibung

Die Erfindung betrifft eine schlüssellose Betätigungs- und/oder Schließeinrichtung für insbesondere Kraftfahrzeuge, mit einer bedienerseitigen Sende-/Empfangseinheit, z. B. Transponder, ferner mit einer fahrzeugseitigen Sende-/Empfangseinheit, z. B. Steuereinheit, und mit wenigstens einer der fahrzeugseitigen Sende-/Empfangseinheit zugeordneten Sende-/Empfangsantenneneinrichtung, welche drei oder mehr räumlich angeordnete Einzel-Antennen aufweist, wobei zwischen bedienerseitiger Sende-/Empfangseinheit und fahrzeugseitiger Sende-/Empfangseinheit ein Datenaustausch stattfindet.

Die vorliegende Erfindung befasst sich also mit einem vorzugsweise in Kraftfahrzeugen einzusetzenden Schließsystem, wobei eine Zugangsberechtigung über eine elektromagnetische Datenabfrage ermittelt wird. Derartige Schließsysteme werden auch als schlüssellose Schließsysteme (Keyless entry-Systeme) bezeichnet. Man unterscheidet bei solchen schlüssellosen Schließsystemen zwischen sogenannten aktiven Systemen, bei denen die Abfrage beispielsweise durch manuelle Betätigung eines Tasters gestartet (eingeleitet) wird. Ein solcher Taster kann beispielsweise auf einem vom Fahrzeugbenutzer mitgeführten Fernbedienungs-Sendergehäuse angeordnet sein.

Demgegenüber sind sogenannte passive Schließsysteme bekannt, bei denen die Abfrage indirekt, beispielsweise durch Betätigung des Türgriffs oder aber auch durch Eintreten in den Aktionsbereich eines (Näherungs-)Sensors gestartet wird und dann automatisch abläuft.

Alles in allem ist bei derartigen Systemen eine umfangreiche (bi)direktionale elektromagnetische Datenübertragung zwischen fahrzeugaußenseitigen Einrichtungen und im Fahrzeug installierten Einrichtungen und umgekehrt nötig, wozu es der Anordnung von Sender- und Empfängereinheit an entsprechenden Stellen des Systems bedarf.

Ein bereits seit einiger Zeit praktiziertes schlüsselloses Zugangssystem für Fahrzeuge arbeitet wie folgt:

Durch beispielsweise Betätigung eines Türaußengriffs wird über eine mit diesem verbundene Steuereinheit im Fahrzeug ein Fragecodesignal erzeugt und über einen Sender an einen außerhalb des Fahrzeuges, beispielsweise beim Fahrzeugnutzer positionierten Datenträger (Transponder) übermittelt. Nach positivem Abgleich des Signals mit den im Datenträger gespeicherten Daten (Code), wird von dem Datenträger ein sogenannter Antwortcode an die Steuereinheit übermittelt, von der dann unmittelbar der Befehl zur Entriegelung des Fahrzeuges an das Schließsystem übermittelt wird.

Üblicherweise erfolgt die elektromagnetische Kommunikation zwischen Steuereinheit und Datenträger über die Frequenzen 125 kHz und 13,56 MHz; und die Kommunikation zwischen Datenträger und Steuereinheit nach positiver Datenerkennung über ein UHF-Signal mit den zwischenzeitlich für diese Zwecke üblichen Frequenzen 434 MHz oder 868 MHz oder über eine bidirektionale Kommunikation durch induktive Kopplung, z. B. Lastmodulation.

Es versteht sich, dass die Übertragung der jeweiligen elektromagnetischen Felder möglichst störungsfrei, insbesondere nach Möglichkeit weitgehend unabhängig von der Lage und Position des fahrzeugaußenseitig angeordneten Datenträgers (Transponders) erfolgen soll, um zu vermeiden, dass die entsprechenden Signale nicht oder nur unvollständig übertragen werden und folglich ein Fahrzeugzugang nicht erzielt werden kann.

Dazu bedarf es optimaler Übertragungseinrichtungen, insbesondere Antennensysteme.

Eine schlüssellose Betätigungs- und/oder Schließeinrichtung des eingangs beschriebenen Aufbaus ist durch die EP 0 783 190 A1 bekannt geworden. Hier wird primär ein tragbarer Transponder beschrieben, dessen verbesserte Empfangs- und Sendecharakteristik im Vordergrund steht.

Die DE 197 18 423 A1 befasst sich mit einem tragbaren Signalempfänger mit einer Empfangseinheit, die ein induktiv übertragenes Signal über eine Antenne empfängt. Der Signalempfänger weist drei Antennen in Form von Spulen auf, deren Windungsflächen etwa jeweils senkrecht zueinander angeordnet sind. Mit Hilfe des Signalempfängers löst ein Benutzer einen Frage-Antwort-Dialog aus. Hierbei wird ein Fragesignal induktiv über ein Magnetfeld von einer Sendeantenne in Form einer Spule im Kraftfahrzeug zu dem Signalempfänger gesendet. Falls der Empfänger das Fragesignal empfängt, so wird ein Antwortsignal erzeugt, das zurück zu dem Kraftfahrzeug gesendet wird. Darauf wird das Antwortsignal mit einem Sollsignal verglichen und bei Übereinstimmung wird ein Freigabesignal erzeugt.

Die DE 197 45 149 A1 befasst sich mit einem Schließsystem für Kraftfahrzeuge, bei dem fahrzeugseitig eine Handhabe vorgesehen ist. Eine zugehörige Sende-/Empfangseinheit ist innerhalb eines Türgriffs angeordnet.

Darüber hinaus wird eine schlüssellose Betätigungs- und/oder Schließeinrichtung in der DE 38 20 248 C2 beschrieben. Hier ist eine Sende-/Empfangsantenneneinrichtung in einem Raum zwischen einem inneren Türpaneel und einer Türinnenverkleidung einer Fahrzeugtür in einer Aufnahmeausnehmung eines Schulterabschnittes des inneren Türpaneels befestigt. Diese Sende-/Empfangsantenneneinrichtung kann aus einer ersten und einer zweiten Rahmenantenne zusammengesetzt sein, die senkrecht zueinander verlaufen.

Allerdings ist der gewählte Einbauort ungünstig, weil er sich praktisch im Innern einer Kraftfahrzeugtür befindet, folglich nahezu vollständig elektromagnetisch abgeschirmt ist. Störungen des Empfangs seitens der fahrzeugseitigen Sende-/Empfangseinheit können also nicht ausgeschlossen werden. Eine Infrarot-Fernbedienung ist in diesem Zusammenhang zudem überhaupt nicht realisierbar, weil die entsprechenden elektromagnetischen Wellen von der metallischen Oberfläche reflektiert werden.

Eine vergleichbare schlüssellose Betätigungs- und/oder Schließeinrichtung ist durch die DE 196 17 038 A1 vorbeschrieben. Die hier verwirklichte Sende-/Empfangsantenneneinrichtung kann in eine dortige Handhabe integriert sein. Allerdings ist der gewählte Aufbau dieser Handhabe aufwendig, weil auf eine spezielle luftabschlüssige Elektronik mit einer Isolierschicht zurückgegriffen wird.

Ähnlich wird nach dem deutschen Gebrauchsmuster 296 23 461 U1 verfahren, welches ein System zum freihändigen Entriegeln und/oder Öffnen von Öffnungsvorrichtungen eines Kraftfahrzeuges beschreibt. Auch hier wird die Möglichkeit angesprochen, eine Sende-/Empfangsantenneneinrichtung in einem Türgriff eines Kraftfahrzeuges anzuordnen. Derartiges ist jedoch - sofern der Türgriff wie üblich metallisch ausgeführt ist - mit ähnlichen Problemen wie zuvor bereits beschrieben verbunden (vgl. DE 38 20 248 C2). Mit anderen Worten ermöglicht eine derartige exponierte Lage der bekannten Sende-/Empfangsantenneneinrichtungen im Türgriff bzw. Türaußengriff einer Kraftfahrzeugtür nicht unmittelbar einen verbesserten Empfang gegenüber einer innerhalb der Kraftfahrzeugtür angeordneten Einrichtung. - Hier will die Erfindung insgesamt Abhilfe schaffen.

Der Erfindung liegt das technische Problem zugrunde, eine derartige schlüssellose Betätigungs- und/oder Schließeinrichtung anzugeben, die kostengünstig und robust aufgebaut ist und insbesondere eine zuverlässige Funktionsweise ermöglicht. Dies impliziert auch die Erkennung des Aufenthaltsortes und der Berechtigung der bedienerseitigen Sende-/Empfangseinheit, z. B. des Transponders, auch bei ungünstiger Lage und Position.

Zur Lösung dieser Aufgabe schlägt die Erfindung bei einer gattungsgemäßen schlüssellosen Betätigungs- und/oder Schließeinrichtung für insbesondere Kraftfahrzeuge vor, dass die drei räumlich angeordneten Einzel-Antennen direkt in den Kunststoff eines Kunststofftüraußengriffes geschützt eingebettet sind. Folglich befinden sich die Einzelantennen in einem metallisch nicht eingeschirmten Einbauort am Kraftfahrzeug.

Üblicherweise handelt es sich bei der bedienerseitigen Sende-/Empfangseinheit um einen Transponder, also ein Sende-/Empfangsgerät. Zur Darstellung der fahrzeugseitigen Sende-/Empfangseinheit wird im Allgemeinen auf die ohnehin vorhandene Steuereinheit zurückgegriffen. Als Datenaustausch kommt zumeist ein solcher in beiden Richtungen in Frage, also sowohl von der fahrzeugseitigen zur bedienerseitigen Sende-/Empfangseinheit als auch in umgekehrter Richtung. Mit anderen Worten findet größtenteils ein bidirektionaler Datenaustausch statt. Weitere vorteilhafte Ausgestaltungen dieser schlüssellosen Betätigungs- und/oder Schließeinrichtung werden in den Patentansprüchen 2 bis 6 beschrieben.

Im Rahmen der Erfindung wird also so vorgegangen, dass die Sende-/Empfangsantenneneinrichtung als Antennengruppe mit mindestens dreidimensionaler Ausrichtung (x-, y- und z-Richtung) ausgelegt wird. Dabei ist vorzugsweise in jeder der Richtungen mindestens ein entsprechendes Antennenelement bzw. eine zugehörige Einzel-Antenne angeordnet.

Der Umstand, dass die erfindungsgemäße Sende-/Empfangsantenneneinrichtung mit ihren drei oder mehr räumlich angeordneten Einzel-Antennen der fahrzeugseitigen Sende-/Empfangseinheit zugeordnet wird beruht auf der Erkenntnis, dass die Abstrahlung elektromagnetischer Wellen im Zuge des Datenaustausches von der bedienerseitigen Sende-/Empfangseinheit, üblicherweise dem Transponder, nicht behindert ist. Vielmehr ist an dieser Stelle davon auszugehen, dass sich von dem Transponder ungehindert Kugelwellen in alle Raumrichtungen ausbreiten, vorzugsweise natürlich in Richtung auf das Fahrzeug und damit die fahrzeugseitige Sende-/Empfangsantenneneinrichtung mit ihren zugehörigen Einzel-Antennen. Diese stellen infolge ihrer räumlichen Anordnung sicher, dass ein noch so kleines Induktionssignal der abgestrahlten Kugelwellen ausreicht, um einen störungsfreien Datenaustausch zwischen der bedienerseitigen und der fahrzeugseitigen Sende-/Empfangseinheit sicherzustellen.

Umgekehrt ist natürlich eine solche fahrzeugseitige Sende-/Empfangsantenneneinrichtung mit drei oder mehr räumlich angeordneten Einzel-Antennen problemlos in der Lage, elektromagnetische Kuppelwellen ausreichender Intensität erzeugen zu können, so dass diese einwandfrei von der bedienerseitigen Sende-/Empfangseinheit bzw. dem Transponder empfangen werden können. Letztlich macht sich dabei die Erfindung die Tatsache zu Nutze, dass jede Einzel-Antenne bzw. Stabantenne eine eigene Kugelwelle abstrahlt. Dabei werden durch den mindestens Dreifach-Charakter dieser Abstrahlung fahrzeugbedingte Abschirmungen äußerst zuverlässig ausgeglichen. Die Erfindung ist also in der Lage, mit Hilfe der zumindest drei Einzel-Antennen Kugelwellen mit mindestens dreifacher Intensität im Vergleich zu einer Einzel-Antenne erzeugen zu können. Daneben besteht natürlich auch die Option, eine Dreifach-Abfolge jedes Signals bzw. jedes einzelnen Datenpaketes zu realisieren, so dass davon auszugehen ist, dass mindestens eines dieser Datenpakete einwandfrei empfangen wird. Diese Vorteile ergeben sich sowohl bei bedienerseitiger Realisierung der beschriebenen Sende-/Empfangsantenneneinrichtung als auch für den Fall, dass diese im oder am Fahrzeug zum Einsatz kommt.

In x-, y- und z-Richtung meint bei einer ersten Ausführungsform, dass die Achsen der Antennen aufeinander senkrecht stehen, wodurch im praktischen Gebrauch die rund um die Antennen durch deren jeweilige Wicklungen erzeugten Magnetfelder gegeneinander optimal um 90° versetzt sind. Dadurch kann eine hervorragende elektromagnetische Kommunikation, insbesondere eine gleichmäßige Reichweite und ein optimaler Rundumempfang bei einem schlüssellosen Zugangssystem erzielt werden.

Als Antennen haben sich für den vorgesehenen Zeck solche als günstig herausgestellt, bei denen der Kern aus synthetischen Werkstoffen (Harzmaterial) oder keramischen Werkstoffen (Ferrit) hergestellt ist und der Spulenkörper durch eine um den Kern, gegebenenfalls nach vorheriger Aufbringung einer Isolation, gewickelte Wicklung gebildet wird. Die Antennen können aber auch als sogenannte Luftspulen und folglich ohne Kern ausgeführt sein.

Erfindungsgemäss wird die Antennenanordnung außerhalb der in der Regel metallischen Außenhaut des Kraftfahrzeuges angeordnet, um jedwede Nachteile (magnetische Abstrahlung, Aufkommen von Wirbelströmen, Abschirmungen) zu vermeiden, z. B. im Bereich der Außenspiegel oder der Türgriffe.

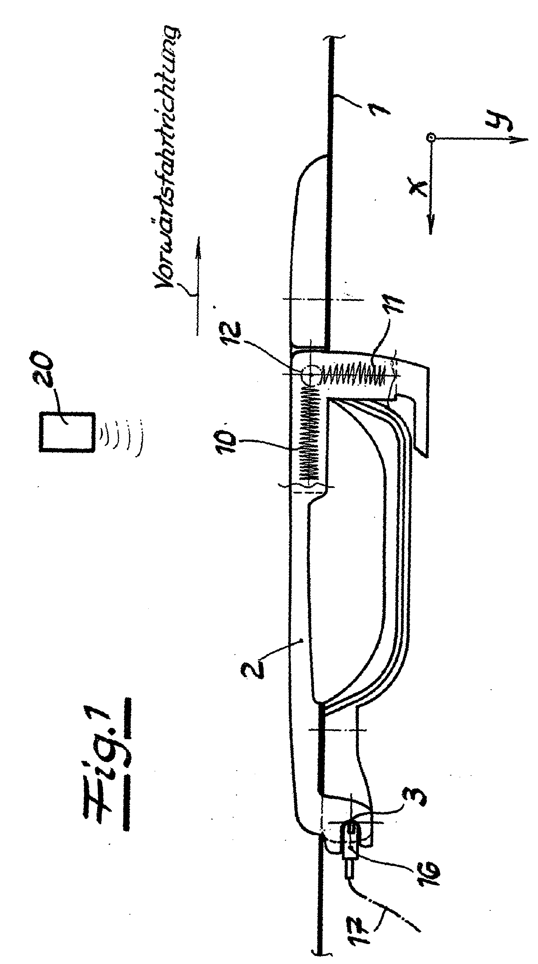

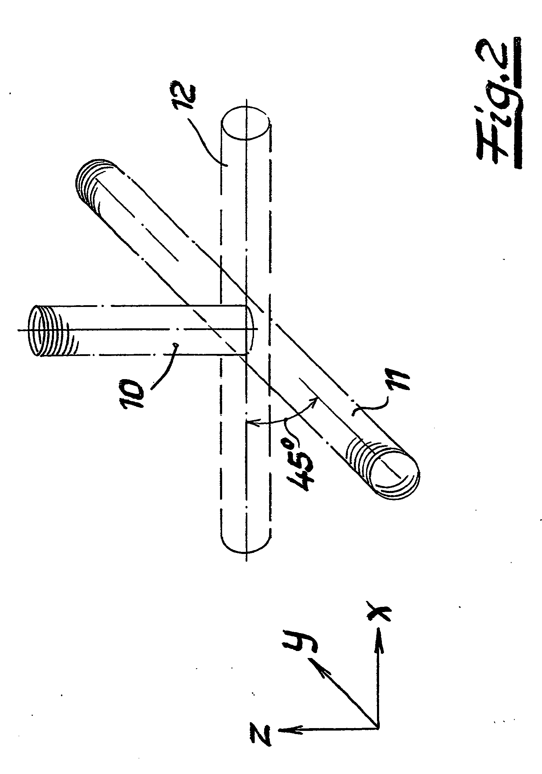

Erfindungsgemäss wird die Antennenanordnung direkt in den Kunststoff eines aus Kunststoff hergestellten Türgriffs geschützt eingebettet. Dies ist aus der beigefügten Fig. 1 ersichtlich. Fig. 2 zeigt eine besonders bevorzugte Antennenanordung der Erfindung.

In Fig. 1 ist mit 1 ein nur angedeuteter Türabschnitt eines Kraftfahrzeuges angegeben, an den ein Türgriff 2 befestigt ist. Der Türgriff 2 ist um einen Drehpunkt 3 und bis zu einem nicht gezeigten Anschlag nach außen 2 schwenkbar. Zumindest der Türgriff ist aus einem glasfaserverstärkten Kunststoffmaterial, bzw. Polyamid, hergestellt, in das drei Antennenelemente 10, 11, 12 als vorschlagsgemäßes Antennensystem eingebettet sind, und zwar die Spule 10 in x-Richtung, die Spule 11 in y-Richtung und die Spule 12 in z-Richtung gemäß dem seitlich dazu angeordneten Koordinatensystem, wobei die x-Richtung mit der Vorwärtsfahrtrichtung übereinstimmt. Die Antennen 10, 11, 12 sind über ein griffendseitig angebrachtes und nicht näher aufgeführtes Anschlußelement 16 (Stecker-Buchsen-System) über Anschlußkabel 17 elektrisch mit der nicht zeichnerisch dargestellten Steuereinrichtung verbunden.

Die Antennen 10, 11, 12 sind bevorzugt wie vorne beschrieben aufgebaut, und zwar mit einem aus einem nicht-leitenden Ferritmaterial hergestellten Kern und einem um diesen ge-wickelten Spulendraht. Die in Fig. 1 beschriebenen Antennen haben bevorzugt folgende Abmaße: Länge 5 bis 10 cm, Durchmesser 0,5 bis 1,5 cm.

Bei einer ganz bevorzugten Ausführungsform des erfindungsgemäßen Vorschlages sind die in einen Türgriff 2 aus Kunststoff eingebetteten Antennen gemäß der Fig. 2 zu zwei Ebenen hin gegeneinander ausgerichtet. Dabei ist ein Antennenelement 10 in z-Richtung und ein zweites 11 bei 45° zwischen den x- und y-Koordinaten angeordnet. Bei dieser Antennenanordnung wird die dritte Antenne 12 in etwa in Richtung der wiederum mit der Vorwärtsfahrtrichtung übereinstimmenden x-Richtung eingesetzt.

Das aus den Fig. 1 und 2 ersichtliche, jeweils im Türgriff 2 eingebettete Antennensystem ist beispielsweise Teil eines schlüssellos betätigbaren Schließsystems, zu dem des weiteren eine im Fahrzeug angeordnete, in den Figuren nicht gezeigte Steuereinrichtung und ein fahrzeugaußenseitiger Datenträger (Transponder) 20 gemäß Fig. 1 mit mindestens einem Sender, einem Empfänger und einem Controller gehören, wobei der Datenträger in diesem Fall in Form einer einfach von dem Fahrzeugbenutzer mitzuführenden Scheckkarte ausgeführt ist, sowie das ebenfalls nicht gezeigte Schließsystem des Fahrzeuges gehören.

Selbstverständlich kann das vorschlagsgemäße Antennensystem auch fahrzeugaußenseitig in dem Datenträger angeordnet sein. Wie weiter vorne angegeben kann es sich bei dem schlüssellosen Türschließsystem auch um ein solches handeln, bei dem über ein vom Fahrzeugbenutzer mitgeführtes Sendergehäuse durch diesen selbst das Signal zur Abfrage gestartet wird.

Wie aus den beigefügten Figuren ersichtlich, sind die erfindungsgemäßen Einzel-Antennen 10, 11 und 12 in einem metallisch nicht abgeschirmten Einbauort angeordnet. Erfindungsgemäss handelt es sich um den Kunststofftüraußengriff 2. Ein derartiger nicht beanspruchter nicht (elektromagnetisch) abgeschirmter Einbauort kann jedoch auch eine Karosserieöffnung oder -aussparung sein. Denkbar aber nicht beansprucht ist es beispielsweise, die vorgenannten Einzel-Antennen 10, 11 und 12 in einer Blinkeröffnung der Karosserie, einem Außenspiegel oder einer Lüftungsöffnung anzubringen, die jeweils mittels (Kunststoff-)Abdeckungen verschlossen sind. Jedenfalls gelangen die Funkwellen problemlos zu einem derartigen Ort und können von hier aus auch unschwer ausgestrahlt werden. Dies gilt grundsätzlich sogar für Infrarotstrahlen, so daß die erfindungsgemäße schlüssellose Betätigung- und/oder Schließeinrichtung grundsätzlich in Verbindung mit ganz unterschiedlichen elektromagnetischen Wellen und Funktionsweisen einsetzbar ist. Dies gilt natürlich auch im Hinblick darauf, daß die zwischen bedienerseitiger Sende-/Empfangseinheit und fahrzeugseitiger Sende-/Empfangseinheit ausgetauschten Daten sowohl analog als auch digital übertragen werden können.

## Patentansprüche

1. Schlüssellose Betätigungs- und/oder Schließeinrichtung für insbesondere Kraftfahrzeuge, mit
- einer bedienerseitigen Sende-/Empfangseinheit (20), z. B. Transponder (20), ferner mit
- einer fahrzeugseitigen Sende-/Empfangseinheit (10, 11, 12, 16, 17), z. B. Steuereinheit, und mit
- wenigstens einer der fahrzeugseitigen Sende-/Empfangseinheit (10, 11, 12, 16, 17) zugeordneten Sende-/Empfangsantenneneinrichtung (10, 11, 12), welche drei oder mehr räumlich angeordnete Einzel-Antennen (10, 11, 12) aufweist,
wobei zwischen bedienerseitiger Sende-/Empfangseinheit (20) und fahrzeugseitiger Sende-/Empfangseinheit (10, 11, 12, 16, 17) ein Datenaustausch stattfindet,
**dadurch gekennzeichnet,dass**
- die Einzel-Antennen (10, 11, 12) direkt in den Kunststoff eines Kunststofftüraußengriffes (2) geschützt eingebettet sind.

2. Schlüssellose Betätigungs- und/oder Schließeinrichtung für insbesondere Kraftfahrzeuge nach Anspruch 1, **dadurch gekennzeichnet, dass** die Einzel-Antennen (10, 11, 12) jeweils in Fahrzeug-Längsachsen-(x-)Richtung, Fahrzeug-Querachsen-(y-)Richtung und Fahrzeug-Hochachsen-(z-)Richtung angeordnet sind.

3. Schlüssellose Betätigungs- und/oder Schließeinrichtung für insbesondere Kraftfahrzeuge nach Anspruch 1 oder 2, **dadurch gekennzeichnet, dass** die drei Einzel-Antennen (10, 11, 12) jeweils im Wesentlichen rechtwinklig zueinander angeordnet sind.

4. Schlüssellose Betätigungs- und/oder Schließeinrichtung für insbesondere Kraftfahrzeuge nach einem der Ansprüche 1 bis 3, **dadurch gekennzeichnet, dass** die Sende-/Empfangsantenneneinrichtung (10, 11, 12) als jeweils induktiv wirkende Spulen (10, 11, 12) mit oder ohne Kern ausgebildet sind.

5. Schlüssellose Betätigungs- und/oder Schließeinrichtung für insbesondere Kraftfahrzeuge nach einem der Ansprüche 1 bis 4, **dadurch gekennzeichnet, dass** die jeweils im Kunststofftüraußengriff (2) angeordneten Einzel-Antennen (10, 11, 12) über eine Steck- oder Drehsteckverbindung (16) mit der Steuereinheit bzw. der Kraftfahrzeugtür verbunden sind.

6. Schlüssellose Betätigungs- und/oder Schließeinrichtung nach einem der Ansprüche 1 bis 5, **dadurch gekennzeichnet, dass** zwischen der bedienerseitigen Sende-/Empfangseinheit (20) und der fahrzeugseitigen Sende-/Empfangseinheit (10, 11, 12, 16, 17) ein bidirektionaler Datenaustausch stattfindet.

## Claims

1. A keyless operating and/or locking device for more preferably motor vehicles with
- a sending/receiving unit (20) on the operator side, e.g. transponder (20), additionally with
- a sending/receiving unit (10, 11, 12, 16, 17) on the vehicle side, e.g. control unit, and with
- at least a sending/receiving aerial device (10, 11, 12) allocated to the vehicle-side sending/receiving unit (10, 11, 12, 16, 17) which has three or more spatially arranged individual aerials (10, 11, 12),
wherein an exchange of data takes place between the sending/receiving unit (20) on the operator side and the sending/receiving unit (10, 11, 12, 16, 17) on the vehicle side,
**characterized in that**
- the individual aerials (10, 11, 12) are directly embedded in a protective manner in the plastic of a plastic outer door handle (2).

2. The keyless operating and/or locking device for more preferably motor vehicles according to claim 1 **characterized in that** each of the individual aerials (10, 11, 12) are arranged in vehicle longitudinal axis (x) direction, vehicle transverse axis (y) direction and vehicle vertical axis (z) direction.

3. The keyless operating and/or locking device for more preferably motor vehicles according to claims 1 or 2 **characterized in that** each of the three individual aerials (10, 11, 12) are largely arranged at right angles to one another.

4. The keyless operating and/or locking device for more preferably motor vehicles according to any one of the claims 1 to 3 **characterized in that** each of the sending/receiving aerial devices (10, 11, 12) is designed as inductively acting coils (10, 11, 12) with or without core.

5. The keyless operating and/or locking device for more preferably motor vehicles according to any one of the claims 1 to 4 **characterized in that** each of the individual aerials (10, 11, 12) arranged in the outer plastic door handle (2) are connected with the control unit or the motor vehicle door by way of a plug or twist and plug connection (16).

6. The keyless operating and/or locking device according to any one of the claims 1 to 5 **characterized in that** a bidirectional data exchange takes place between the sending/receiving unit (20) on the operator side and the sending/receiving unit (10, 11, 12, 16, 17) on the vehicle side.

## Revendications

1. Dispositif d'actionnement et/ou de fermeture sans clé, en particulier pour des véhicules automobiles, comprenant:
- une unité d'émission et de réception du côté utilisateur (20), par exemple un transpondeur (20) ; comprenant en outre
- une unité d'émission et de réception du côté véhicule (10, 11, 12, 16, 17), par exemple une unité de commande ; et comprenant
- au moins un dispositif d'antenne d'émission et de réception (10, 11, 12) attribué à l'unité d'émission et de réception du côté véhicule (10, 11, 12, 16, 17), lequel présente trois antennes individuelles ou plus, agencées dans l'espace,
un échange de données ayant lieu entre l'unité d'émission et de réception du côté utilisateur (20) et l'unité d'émission et de réception du côté véhicule (10, 11, 12, 16, 17),
**caractérisé en ce que** les antennes individuelles (10, 11, 12) sont noyées directement dans la matière plastique d'une poignée extérieure de portière (2) en matière plastique de manière à être protégées.

2. Dispositif d'actionnement et/ou de fermeture sans clé, en particulier pour des véhicules automobiles, selon la revendication 1, **caractérisé en ce que** les antennes individuelles (10, 11, 12) sont agencées respectivement dans la direction d'axe longitudinal de véhicule (x), dans la direction d'axe transversal de véhicule (y) et dans la direction d'axe vertical de véhicule (z).

3. Dispositif d'actionnement et/ou de fermeture sans clé, en particulier pour des véhicules automobiles, selon l'une ou l'autre des revendications 1 et 2, **caractérisé en ce que** les trois antennes individuelles (10, 11, 12) sont respectivement agencées sensiblement en angle droit l'une par rapport à l'autre.

4. Dispositif d'actionnement et/ou de fermeture sans clé, en particulier pour des véhicules automobiles, selon l'une des revendications 1 à 3, **caractérisé en ce que** les dispositifs d'antenne d'émission et de réception (10, 11, 12) sont réalisés comme des bobines (10, 11, 12) agissant respectivement par induction, avec ou sans noyau.

5. Dispositif d'actionnement et/ou de fermeture sans clé, en particulier pour des véhicules automobiles, selon l'une des revendications 1 à 4, **caractérisé en ce que** les antennes individuelles (10, 11, 12) agencées respectivement dans la poignée extérieure de portière (2) en matière plastique sont reliées à l'unité de commande ou à la portière du véhicule automobile par l'intermédiaire d'une liaison enfichable ou d'une liaison enfichable par rotation (16).

6. Dispositif d'actionnement et/ou de fermeture sans clé, en particulier pour des véhicules automobiles, selon l'une des revendications 1 à 5, **caractérisé en ce qu'**un échange de données bidirectionnel a lieu entre l'unité d'émission et de réception du côté utilisateur (20) et l'unité d'émission et de réception du côté véhicule (10, 11, 12, 16, 17).
